# EUROPEAN PATENT APPLICATION

(11) **EP 4 756 433 A1**
(43) Date of publication of application: **10.06.2026**
(21) Application number: 24848775.3
(22) Date of filing: 01.07.2024
(51) Int. Cl.: G01N 35/10

(54) **AUTOMATED ANALYSIS DEVICE AND CONTROL METHOD FOR SAME**

(30) Priority: 31.07.2023 JP 2023124911
(71) Applicant: HITACHI HIGH-TECH CORPORATION, Tokyo 105-6409 (JP)
(72) Inventor: YAMAUCHI Masato, Tokyo 105-6409 (JP); MORI Takamichi, Tokyo 105-6409 (JP)
(74) Representative: Strehl & Partner mbB
(86) International application number: PCT/JP2024/023763
(87) International publication number: WO 2025/028116

(57) **Abstract**

An object of the present invention is to reduce a replacement frequency of a probe cleaner in an automatic analysis device using a plurality of probe cleaners and a control method for the same. An automatic analysis device according to the present invention includes a dispensing probe that performs aspiration and discharge of at least one of a reagent and a sample and a liquid delivery mechanism that delivers each of a first probe cleaner and a second probe cleaner for cleaning the dispensing probe, a heterogeneous probe cleaner region in which the first probe cleaner and the second probe cleaner may exist, and a storage unit that stores a type of the probe cleaner existing in the heterogeneous probe cleaner region (see Fig. 5).

## Description

### Technical Field

The present invention relates to an automatic analysis device and a control method for the same. For example, the present invention relates to an automatic analysis device that performs qualitative analysis or quantitative analysis of biological samples such as blood and urine.

### Background Art

When dispensing specimens, probes are cleaned using a probe cleaner that removes specimen components, reagent components, and the like adhering to side surfaces of the probes, thereby preventing such components from being carried over to the next specimen such that a dispensing accuracy is maintained.

As the background art in the technical field, there is disclosed in PTL 1. PTL 1 presents probe cleaning performed using a first probe cleaner and a second probe cleaner that are different from each other.

### Citation List

### Patent Literature

PTL 1: JP2020-514707A

### Summary of Invention

### Technical Problem

When probes are cleaned using a plurality of probe cleaners that are different from each other, for simple structure, it is preferable that a common flow path is used as much as possible and the probe cleaners are replaced as necessary. However, when a replacement frequency is high, since the probe cleaner is discarded in every replacement, a consumption of the probe cleaner increases and an operating cost rises. Time is also consumed in each replacement, and it takes longer to start the actual analysis.

The present invention has been made to solve such problems, and an object of the present invention is to reduce a replacement frequency of a probe cleaner in an automatic analysis device using a plurality of probe cleaners and a control method for the same.

### Solution to Problem

An example of an automatic analysis device according to the present invention includes,
a dispensing probe that performs aspiration and discharge of at least one of a reagent and a sample and a liquid delivery mechanism that delivers each of a first probe cleaner and a second probe cleaner for cleaning the dispensing probe,
a heterogeneous probe cleaner region in which the first probe cleaner and the second probe cleaner may exist, and
a storage unit that stores a type of the probe cleaner existing in the heterogeneous probe cleaner region.

An example of a control method for an automatic analysis device according to the present invention is a control method for an automatic analysis device including,
a dispensing probe that performs aspiration and discharge of at least one of a reagent and a sample and a liquid delivery mechanism that delivers each of a first probe cleaner and a second probe cleaner for cleaning the dispensing probe, and
a heterogeneous probe cleaner region in which the first probe cleaner and the second probe cleaner may exist, wherein
the control method includes a step of storing a type of the probe cleaner existing in the heterogeneous probe cleaner region in a storage unit of the automatic analysis device.

### Advantageous Effects of Invention

According to the present invention, a replacement frequency of probe cleaners can be reduced. As a result, it is possible to, for example, reduce a consumption of the probe cleaner and shorten a time taken until the analysis starts.

Other problems, configurations, and effects will become apparent from the following description of the embodiment.

### Brief Description of Drawings

[Fig. 1] Fig. 1 is a perspective view of an automatic analysis device according to a first embodiment of the present invention.
[Fig. 2] Fig. 2 is a schematic view of a configuration for feeding a probe cleaner to a probe cleaner storage portion of a probe cleaning mechanism.
[Fig. 3] Fig. 3 is a flowchart illustrating transition of a device status.
[Fig. 4] Fig. 4 is a flowchart illustrating selection of a reset operation.
[Fig. 5] Fig. 5 is a flowchart illustrating determination of whether a replacement operation of a probe cleaner is necessary and with which probe cleaner to replace the probe cleaner.
[Fig. 6] Fig. 6 is a diagram in which a device status, a behavior of a control unit, an operation performed in the automatic analysis device, a probe cleaner filled in a heterogeneous probe cleaner region, a flow path parameter stored in a storage unit, and the like during each operation are arranged in the chronological order.
[Fig. 7] Fig. 7 is a diagram in which the device status, the behavior of the control unit, the operation performed in the automatic analysis device, the probe cleaner filled in the heterogeneous probe cleaner region, the flow path parameter stored in the storage unit, and the like during each operation when an abnormality occurred in a replacement operation are arranged in the chronological order.

### Description of Embodiments

### [First Embodiment]

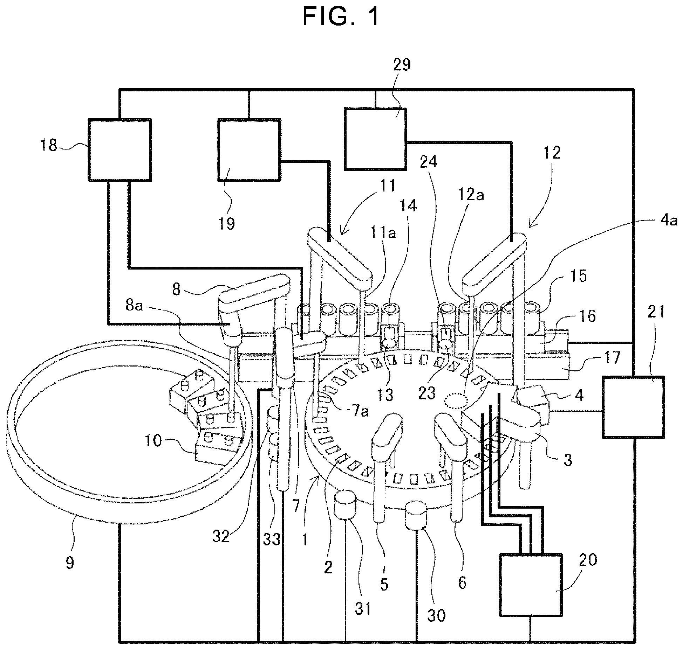

A configuration and an operation of an automatic analysis device according to a first embodiment of the present invention will be described with reference to Figs. 1 to 5.

Fig. 1 is a perspective view of the automatic analysis device according to the first embodiment. In Fig. 1, the automatic analysis device is a device that performs dispensing of a sample and a reagent into each of a plurality of reaction containers 2 and causes a reaction therebetween to measure the reacting solution. The automatic analysis device includes a reaction disc 1, a reagent disc 9, a sample transport mechanism 17, reagent dispensing mechanisms 7 and 8, a reagent syringe 18, a sample dispensing mechanism 11, a sample syringe 19, a cleaning mechanism 3, a light source 4a, a spectrophotometer 4, stirring mechanisms 5 and 6, a cleaning pump 20, cleaning tanks 13, 23, 30, 31, 32, and 33, and a control unit 21.

The reaction containers 2 are arranged on a circumference of the reaction disc 1. The sample transport mechanism 17 that moves a rack 16 on which a sample container 15 is mounted is installed near the reaction disc 1.

The sample dispensing mechanism 11 capable of rotation and vertical movement is installed between the reaction disc 1 and the sample transport mechanism 17, in which the sample dispensing mechanism 11 includes a sample probe 11a. The sample syringe 19 is connected to the sample probe 11a. The sample probe 11a moves in an arc around the rotation axis and performs dispensing of a sample from the sample container 15 into the reaction container 2.

A probe cleaning mechanism 14 for cleaning the sample probe 11a is disposed on the rotation trajectory of the sample probe 11a. The probe cleaner to be used is fed automatically.

Similarly, a sample dispensing mechanism 12 capable of rotation and vertical movement is installed between the reaction disc 1 and the sample transport mechanism 17, in which the sample dispensing mechanism 12 includes a sample probe 12a. A sample syringe 29 is connected to the sample probe 12a. The sample probe 12a moves in an arc around the rotation axis and performs dispensing of a sample from the sample container 15 into the reaction container 2.

A probe cleaning mechanism 24 for cleaning the sample probe 12a is disposed on the rotation trajectory of the sample probe 12a. The probe cleaner to be used is fed automatically.

A plurality of reagent bottles 10 can be placed on a circumference of the reagent disc 9. The reagent disc 9 is cooled.

The reagent dispensing mechanisms 7 and 8 capable of rotation and vertical movement are installed between the reaction disc 1 and the reagent disc 9, in which the reagent dispensing mechanisms 7 and 8 include each of reagent probes 7a and 8a. The reagent syringe 18 is connected to the reagent probes 7a and 8a. The reagent probes 7a and 8a move in an arc around the rotation axis, access inside of the reagent disc 9, and perform dispensing of a reagent from the reagent bottle 10 into the reaction container 2.

The cleaning mechanism 3, the light source 4a, the spectrophotometer 4, and the stirring mechanisms 5 and 6 are further disposed around the reaction disc 1. The cleaning pump 20 is connected to the cleaning mechanism 3. The cleaning tanks 13, 23, 30, 31, 32, and 33 are each installed within a working range of each of the reagent dispensing mechanisms 7 and 8, the sample dispensing mechanism 11, the sample dispensing mechanism 12, and the stirring mechanisms 5 and 6.

Each of the probes and the stirring mechanisms are cleaned in the cleaning tanks 13, 23, 30, 31, 32, and 33 using the probe cleaner fed by the cleaning pump 20. The sample container 15 contains a sample to be tested (specimen) such as blood and is mounted on the rack 16 to be transported by the sample transport mechanism 17. Each mechanism is also connected to the control unit 21.

A general configuration example of the automatic analysis device is described above.

In the present embodiment, four probes of the reagent probes 7a and 8a, the sample probe 11a, and the sample probe 12a are provided as dispensing probes, but the number of dispensing probes only needs to be one or more. That is, the automatic analysis device may include any number of dispensing probes as long as a dispensing probe that performs aspiration and discharge of at least one of a reagent and a sample is provided.

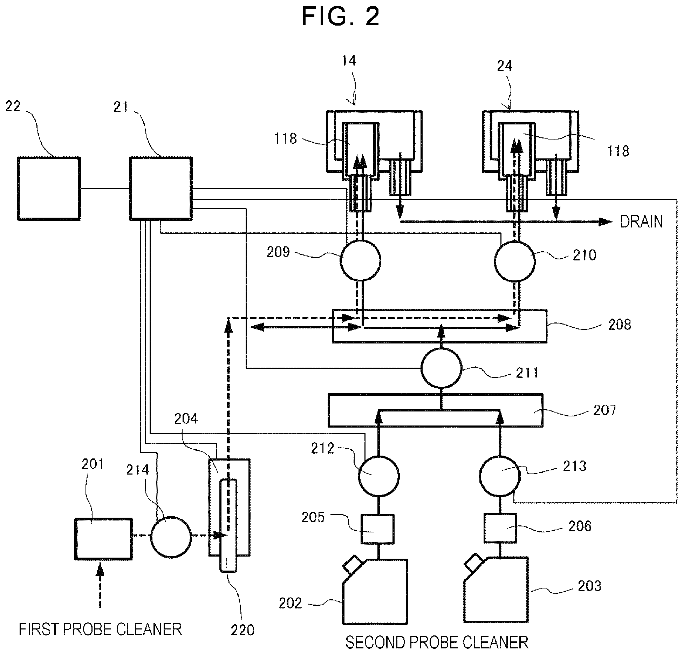

The operation of the probe cleaning mechanism will be described with reference to Fig. 2. Fig. 2 is a schematic view of a configuration that feeds a probe cleaner to a probe cleaner storage portion 118 of each of the probe cleaning mechanisms 14 and 24.

The automatic analysis device includes a probe cleaner feeding pump 201, a probe cleaner feeding syringe 204 including a plunger 220, branch pipes 207 and 208, probe cleaner remainder sensors 205 and 206, solenoid valves 209 to 214, the control unit 21, and a storage unit 22. The probe cleaning mechanisms 14 and 24 are provided with lower opening portions for discharging overflowing probe cleaners. In the example of Fig. 2, a cleaning mechanism that feeds a probe cleaner to the probe cleaner storage portion 118 of each of the two probe cleaning mechanisms 14 and 24 is schematically shown.

A first probe cleaner fed from the probe cleaner feeding pump 201 can be automatically fed to the probe cleaning mechanisms 14 and 24, and a second probe cleaner stored in probe cleaner storage tanks 202 and 203 can be fed to the probe cleaning mechanisms 14 and 24.

A part of the configuration that feeds the probe cleaner is used for both the first probe cleaner and the second probe cleaner. For example, in the example of Fig. 2, any of the first probe cleaner and the second probe cleaner can be delivered to the branch pipe 208, the solenoid valve 209, the solenoid valve 210, two probe cleaner storage portions 118, and flow paths connecting therebetween. Thus, the automatic analysis device includes a heterogeneous probe cleaner region in which different types of probe cleaners, that is, the first probe cleaner and the second probe cleaner, may exist. In the present embodiment, the first probe cleaner and the second probe cleaner cannot exist simultaneously in the heterogeneous probe cleaner region.

Thus, the probe cleaner feeding syringe 204 (alternatively, a configuration obtained by adding the probe cleaner feeding pump 201, the solenoid valves 209 to 214, and the like thereto) functions as a liquid delivery mechanism and delivers each of the first probe cleaner and the second probe cleaner for cleaning each dispensing probe.

The probe cleaner in the heterogeneous probe cleaner region can be replaced by an operation of the probe cleaner feeding syringe 204. For example, operations such as replacing an old second probe cleaner with a fresh second probe cleaner, replacing the first probe cleaner with the second probe cleaner, and replacing the second probe cleaner with the first probe cleaner can be performed.

The control unit 21 contains, for example, a processor as calculation means. The storage unit 22 contains, for example, a storage medium such as a semiconductor memory device and a magnetic disk device. A part or all of the storage media may be non-transitory storage media.

The storage unit 22 stores a flow path parameter. The flow path parameter represents a type of the probe cleaner existing in the heterogeneous probe cleaner region.

Since the automatic analysis devices of the related arts lack such a parameter, it is necessary to replace the probe cleaner in the heterogeneous probe cleaner region at every milestone of the device status in preparation for exceptional processes such as abnormal shutdown.

Meanwhile, the automatic analysis device according to the present embodiment stores the flow path parameter and identifies the type of the probe cleaner in the heterogeneous probe cleaner region, whereby the device can determine a timing at which the probe cleaner is to be replaced additionally or again by exceptional processes. Therefore, a replacement frequency of the probe cleaner can be reduced, whereby, for example, a consumption of the probe cleaner is reduced and/or a time taken until the analysis starts is shortened.

The flow path parameter takes, for example, one value from "first probe cleaner" and "second probe cleaner". That is, the storage unit 22 can store whether the first probe cleaner exists or the second probe cleaner exists in the heterogeneous probe cleaner region. In the present embodiment, an initial value of the flow path parameter is the first probe cleaner.

The storage unit 22 may also store a computer program in addition to the flow path parameter described above. The automatic analysis device may execute the functions described in the present embodiment by the processor of the control unit 21 executing the computer program.

A feeding source of the second probe cleaner can be switched between the probe cleaner storage tank 202 and the probe cleaner storage tank 203 based on a detection status of the probe cleaner remainder sensors 205 and 206.

The first probe cleaner is, for example, water or a neutral detergent, and the second probe cleaner is, for example, a special alkaline or acidic probe cleaner.

The example of Fig. 2 describes a configuration in which two storage tanks are installed for the second probe cleaner (the probe cleaner storage tank 202 and the probe cleaner storage tank 203) and a changeover function of the second probe cleaner is provided, but the operation of feeding the probe cleaner is the same even in a configuration including one probe cleaner storage tank 202 and one probe cleaner storage portion 118 for the second probe cleaner.

The automatic analysis device can selectively execute plural types of reset operations as reset operations for moving the plunger 220 to an initial position (in the present embodiment, referred to as an upper limit point). The plural types of reset operations include a first reset operation and a second reset operation in which the amount of delivered liquid is smaller than that in the first reset operation.

For example, in the probe cleaner feeding syringe 204 of the present embodiment, the first reset operation is a full reset operation in which the plunger 220 performs a full stroke operation for checking the sensor and/or the mechanism.

For example, in the full reset operation, the plunger 220 first moves from any position to the upper limit point. Such an operation includes an operation in which the plunger 220 moves to a lower limit point (maximum aspirating position) and then moves to the upper limit point (maximum discharging position). By performing such an operation, it is possible to check, for example, whether the probe cleaner feeding syringe 204 operates normally.

A short reset operation includes, for example, the following operation. First, the plunger 220 moves to the upper limit point. After the sensor or the like detects that the plunger 220 is at the upper limit point, the plunger 220 slightly moves toward the lower limit point (that is, performs slight aspiration) until it is detected that the plunger 220 is not at the upper limit point. After it is detected that the plunger 220 is not at the upper limit point, the plunger 220 moves back to the upper limit point. By performing such an operation, it is possible to check whether the sensor or the like operates normally.

Here, the consumption of the probe cleaner (for example, the second probe cleaner) greatly varies depending on how much the plunger 220 of the probe cleaner feeding syringe 204 moves in the operation. In the full reset, the movement amount of the plunger 220 is large, and in the short reset, the movement amount of the plunger 220 is small. Therefore, the consumption of the second probe cleaner is smaller in the short reset in which the movement of the plunger 220 is small.

It is preferable that, after starting, the automatic analysis device performs the full reset at least once before starting the analysis operation to confirm the full stroke operation of each mechanism.

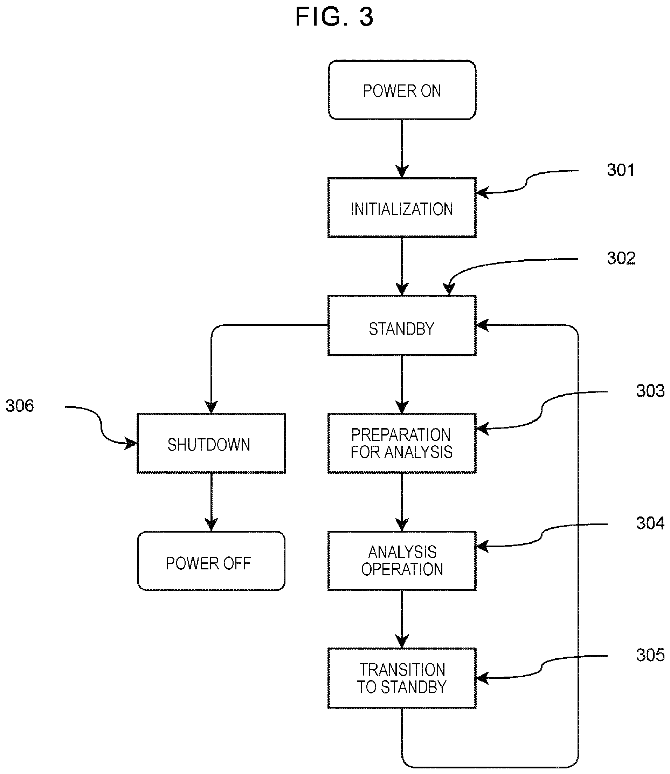

Fig. 3 is a flowchart illustrating transition from power ON to power OFF of a device status of the automatic analysis device according to the first embodiment. The device status is, for example, stored in the storage unit 22 and updated by the control unit 21.

When the automatic analysis device is turned on, the device status transitions to initialization (step 301) as a start preparing operation, and then transitions to standby (step 302). When the device is instructed to start analysis, the device status transitions to preparation for analysis (step 303), and then transitions to analysis operation (step 304) to start the analysis operation. After the analysis operation is completed, the device status transitions to transition to standby (step 305), and then transitions to standby again.

When the operation of the automatic analysis device ends, the device status transitions to shutdown (step 306) as an end preparing operation, and the device is turned off as the shutdown process is completed. Here, the device status refers to each state of the steps 301 to 306. However, a device status other than the each state may also be included.

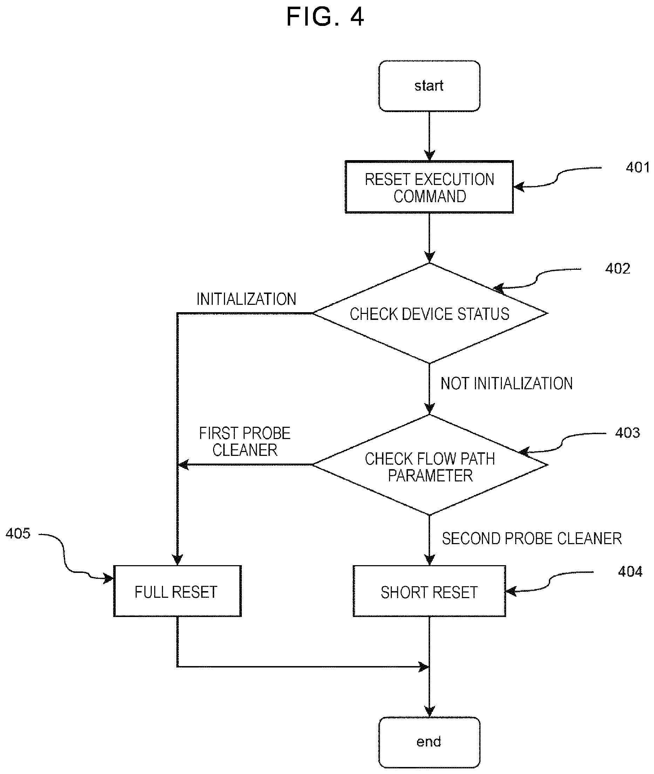

Fig. 4 is a flowchart illustrating determination of selecting one reset operation based on the device status and the flow path parameter.

When a command to execute the reset operation is given (step 401), the control unit checks the device status (step 402). When the device status is initialization, the automatic analysis device executes the full reset (step 405).

When the device status is a status other than initialization, the control unit checks the flow path parameter (step 403). When the flow path parameter is the second probe cleaner, the automatic analysis device executes the short reset (step 404). When the flow path parameter is the first probe cleaner, the automatic analysis device executes the full reset (step 405).

As such, the automatic analysis device controls the liquid delivery mechanism based on the flow path parameter (that is, the type of the probe cleaner stored in the storage unit 22). Particularly, the automatic analysis device selects the full reset or the short reset based on the flow path parameter and causes the liquid delivery mechanism to execute the selected reset operation. In the example of Fig. 4, the short reset is selected when the flow path parameter is the second probe cleaner, and thus the consumption of the second probe cleaner can be reduced. In some cases, the second probe cleaner (for example, a special alkaline or acidic probe cleaner) is more expensive than the first probe cleaner (for example, water or a neutral detergent), and then, it is particularly preferable that the consumption of the second probe cleaner is reduced.

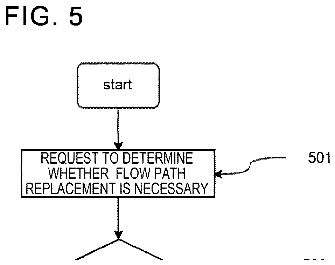

Fig. 5 is a flowchart illustrating determination of whether a replacement operation of a probe cleaner is necessary and with which probe cleaner to replace the probe cleaner based on the device status and the flow path parameter.

When a command to determine whether flow path replacement is necessary is given (step 501), the control unit checks the device status (step 502). When the device status is a status other than shutdown, the control unit checks the flow path parameter (step 503). When the flow path parameter is the second probe cleaner, the operation is completed without executing the replacement operation of the probe cleaner.

When the flow path parameter is the first probe cleaner, the probe cleaner in the heterogeneous probe cleaner region is replaced with the second probe cleaner (step 504). Then, the control unit updates the flow path parameter stored in the storage unit to the second probe cleaner (step 505). In the step 505, the storage unit 22 stores, as the flow path parameter, that the type of the probe cleaner existing in the heterogeneous probe cleaner region is the second probe cleaner.

The control unit checks the device status (step 502), and when the device status is shutdown, the probe cleaner in the heterogeneous probe cleaner region is replaced with the first probe cleaner (step 506). Then, the control unit updates the flow path parameter stored in the storage unit to the first probe cleaner (step 507). In the step 507, the storage unit 22 stores, as the flow path parameter, that the type of the probe cleaner existing in the heterogeneous probe cleaner region is the first probe cleaner.

As such, the type of the probe cleaner existing in the heterogeneous probe cleaner region can always be constant for the next starting since the automatic analysis device replaces the probe cleaner in the shutdown operation.

Thus, the automatic analysis device (particularly, the control unit) controls the liquid delivery mechanism by determining, based on the device status and the flow path parameter,
- whether replacement of the probe cleaner existing in the heterogeneous probe cleaner region is necessary, and
- the type of the probe cleaner to be delivered for replacement. According to such an operation, the cleaning operation can be performed more efficiently, and as a result, the consumption of the probe cleaner can be reduced.

In particular, the second probe cleaner may always be stored in the heterogeneous probe cleaner region in the present embodiment except for when the device status is the shutdown operation. Therefore, the replacement operation is not necessary when the flow path parameter is the second probe cleaner, and determination in the step 503 in the process of Fig. 5 allows omission of an unnecessary replacement operation, whereby the consumption of the second probe cleaner can be reduced.

In the above example, both of whether replacement is necessary and the type of the probe cleaner are determined based on the device status and the flow path parameter, but a modification example in which only one of whether replacement is necessary and the type of the probe cleaner is determined is also possible. Here, the other of whether replacement is necessary and the type of the probe cleaner may be determined based on another criterion.

### [First Operation Example]

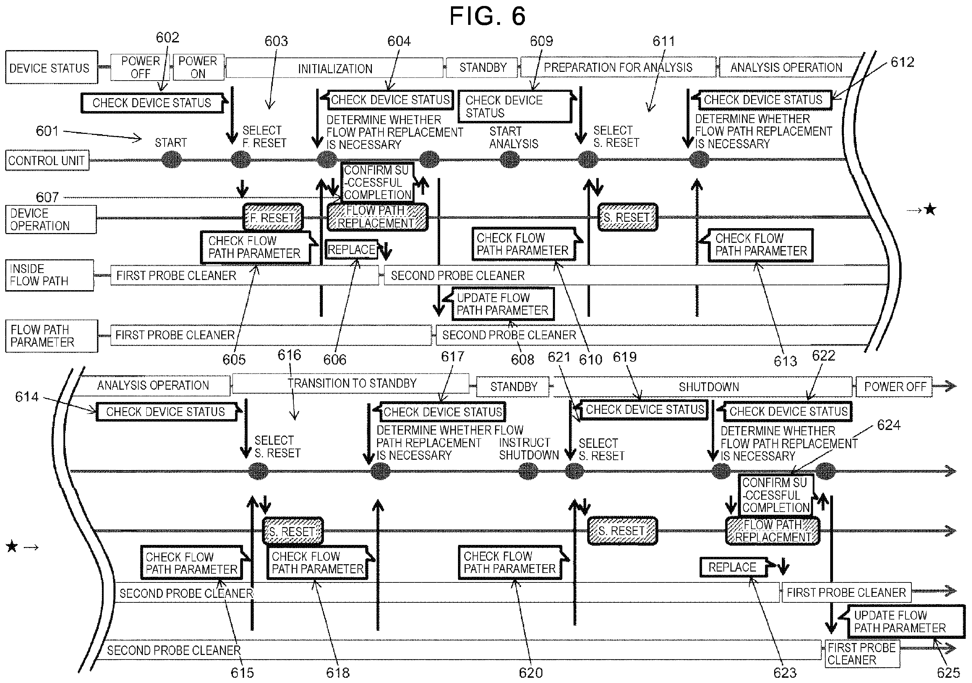

An operation example when the probe cleaner is successfully replaced from starting to shutdown of the automatic analysis device will be described with reference to Fig. 6.

Fig. 6 is a diagram in which the device status, the behavior of the control unit, the operation performed in the automatic analysis device, the probe cleaner filled in the heterogeneous probe cleaner region, the flow path parameter stored in the storage unit, and the like during each operation are arranged in the chronological order. Determination performed by the control unit when checking each type of information is in accordance with each of Figs. 4 and 5. In Fig. 6, "F. reset" represents the full reset, and "S. reset" represents the short reset.

The device is turned on (step 601), and an initialization operation starts. The control unit determines which reset operation is to be selected. In the process of Fig. 4, the control unit checks the device status (step 602). Since the device status is initialization, the process of Fig. 4 proceeds to the step 405 and the full reset is selected (step 603).

Next, when the device status transitions, the control unit determines whether the replacement operation of the probe cleaner is necessary. In the process of Fig. 5, the control unit checks a next device status (step 604). Since the next device status is standby, next, the flow path parameter is checked (step 605). Since the flow path parameter is the first probe cleaner, the process of Fig. 5 proceeds to the step 504, whereby the probe cleaner in the heterogeneous probe cleaner region is replaced with the second probe cleaner (step 606). The control unit confirms that the flow path replacement is successfully completed (step 607). Then, the control unit updates the flow path parameter stored in the storage unit to the second probe cleaner (step 608). After replacement, the device status transitions to standby.

When analysis start is instructed, the device status transitions from standby to preparation for analysis, thereby completing the transition. Thereafter, the control unit determines which reset operation is to be selected. In the process of Fig. 4, the control unit checks the device status (step 609). Since the device status is preparation for analysis, that is, a status other than initialization, the control unit checks the flow path parameter (step 610). Since the flow path parameter is the second probe cleaner, the process of Fig. 4 proceeds to the step 404 and the short reset is selected (step 611).

Next, when the device status transitions, the control unit determines whether the replacement operation of the probe cleaner in the heterogeneous probe cleaner region is necessary. In the process of Fig. 5, the control unit checks a next device status (step 612). Since the next device status is analysis operation, next, the flow path parameter is checked (step 613). Since the flow path parameter is the second probe cleaner, the steps 504 and 505 of Fig. 5 are not executed, that is, the device status transitions to analysis operation without replacing the probe cleaner.

When the analysis is completed, the device status transitions from operation to transition to standby, thereby completing the transition. Thereafter, the control unit determines which reset operation is to be selected. In the process of Fig. 4, the control unit checks the device status (step 614). Since the device status is transition to standby, that is, a status other than initialization, the control unit checks the flow path parameter (step 615). Since the flow path parameter is the second probe cleaner, the process of Fig. 4 proceeds to the step 404 and the short reset is selected (step 616).

Next, when the device status transitions, the control unit determines whether the replacement operation of the probe cleaner in the heterogeneous probe cleaner region is necessary. In the process of Fig. 5, the control unit checks the next device status (step 617). Since the next device status is standby, next, the flow path parameter is checked (step 618). Since the flow path parameter is the second probe cleaner, the steps 504 and 505 of Fig. 5 are not executed, that is, the device status transitions to standby without replacing the probe cleaner.

When the analysis is started again, the operation is the same as above, and the full reset and the replacement operation of the probe cleaner are not performed.

When shutdown is instructed, to turn off the device, the device status transitions from standby to shutdown, thereby completing the transition. Thereafter, the control unit determines which reset operation is to be selected. In the process of Fig. 4, the control unit checks the device status (step 619). Since the device status is shutdown, that is, a status other than initialization, the control unit checks the flow path parameter (step 620). Since the flow path parameter is the second probe cleaner, the process of Fig. 4 proceeds to the step 404 and the short reset is selected (step 621).

Next, the control unit determines whether the replacement operation of the probe cleaner is necessary (here, the device status does not transition, and in the case of shutdown, the process of Fig. 5 is executed next). In the process of Fig. 5, the control unit checks the next device status (step 622). Here, it is assumed that the next device status is shutdown. Since the next device status is shutdown, the process of Fig. 5 proceeds to the step 506, whereby the probe cleaner is replaced with the first probe cleaner (step 623). The control unit confirms that the flow path replacement is successfully completed (step 624). Then, the control unit updates the flow path parameter stored in the storage unit to the first probe cleaner (step 625). Thereafter, the device is turned off.

As described above, the number of execution of the full reset or the replacement operation of the probe cleaner is reduced even when the analysis is performed a plurality of times. In particular, by storing the flow path parameter, the replacement operation becomes unnecessary when the same probe cleaner is used (for example, the determination performed in the step 503 of Fig. 5). As a result, for example, the consumption of the probe cleaner is reduced, and a reset time (a time taken until the analysis starts) is shortened.

### [Second Operation Example]

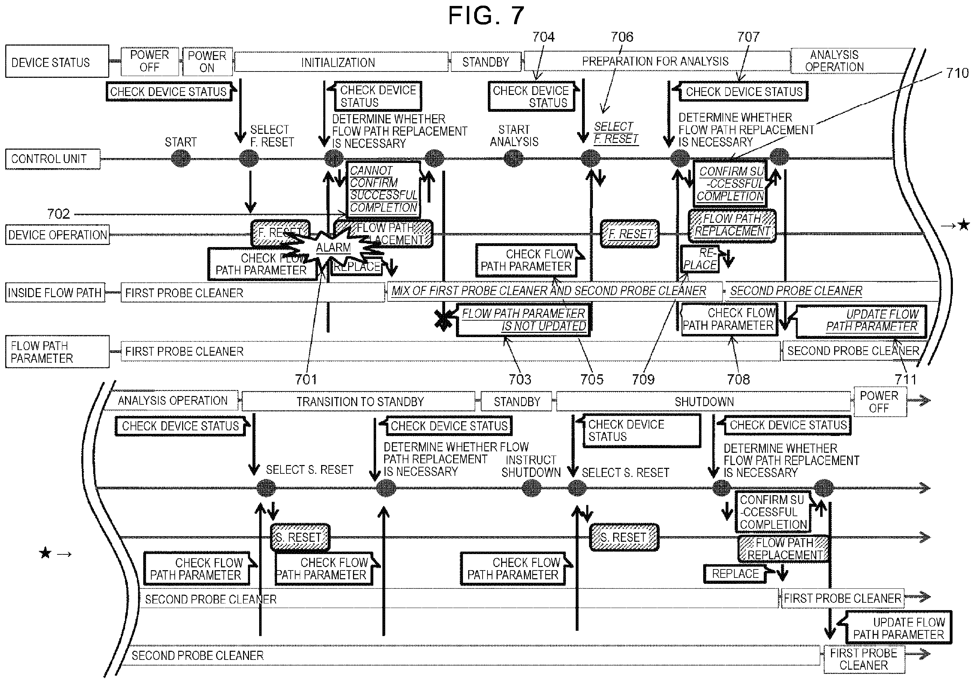

An operation example in which the control unit detects an abnormality and issues an alarm after starting the device, and the flow path is not successfully replaced will be described with reference to Fig. 7.

Fig. 7 is a diagram in which each operation performed when an abnormality is detected during the operation of the automatic analysis device according to the present embodiment is arranged in the chronological order. Determination performed by the control unit when checking each type of information is in accordance with each of Figs. 4 and 5. Also in Fig. 7, "F. reset" represents the full reset, and "S. reset" represents the short reset.

As in the first operation example, initialization starts after starting the device. In the present operation example, the control unit detects an abnormality and issues an alarm (step 701) during execution (before completion) of the replacement operation of the probe cleaner (step 606 in Fig. 6). As a result, the control unit cannot confirm whether the flow path replacement is successfully completed (step 702), and the flow path parameter is not updated to the second probe cleaner (step 703). Then, the control unit interrupts the flowchart of Fig. 5, and the device status transitions to standby.

Here, before completion of the step 606 more specifically refers to before the operation of the plunger 220 is completed. This is because, when the replacement operation of the probe cleaner stops before the operation of the plunger 220 is completed, the first probe cleaner and the second probe cleaner are incompletely mixed in the flow path.

When analysis start is instructed, the device status transitions from standby to preparation for analysis, thereby completing the transition. Thereafter, the control unit determines which reset operation is to be selected. In the process of Fig. 4, the control unit checks the device status (step 704). Since the device status is preparation for analysis, that is, a status other than initialization, the control unit checks the flow path parameter (step 705). Since the flow path parameter is the first probe cleaner, the process of Fig. 4 proceeds to the step 405 and the full reset is selected (step 706).

Next, when the device status transitions, the control unit determines whether the replacement operation of the probe cleaner in the heterogeneous probe cleaner region is necessary. In the process of Fig. 5, the control unit checks the next device status (step 707). Since the next device status is analysis operation, next, the flow path parameter is checked (step 708). Since the flow path parameter is the first probe cleaner, the steps 504 and 505 of Fig. 5 are executed, whereby the probe cleaner in the heterogeneous probe cleaner region is replaced with the second probe cleaner (step 709). The control unit confirms that the flow path replacement is successfully completed (step 710). Then, the control unit updates the flow path parameter stored in the storage unit to the second probe cleaner (step 711). After the replacement, the device status transitions to operation.

When an alarm is issued after the step 607 is performed, since the replacement operation of the probe cleaner is completed and the flow path parameter is updated, the replacement operation is assumed to be successfully completed.

As described above, by following the flowcharts of Figs. 4 and 5, the full reset is executed at an appropriate timing when an abnormality occurs in the device. Even when the replacement operation of the probe cleaner is interrupted, the full reset is executed again before starting the analysis, and the replacement operation of the probe cleaner is performed. Since the number of execution of the replacement operation is reduced in both cases, the consumption of the probe cleaner is reduced and the reset time (the time taken until the analysis starts) is shortened compared to those in the configuration of the related art (in which the number of execution of the replacement operation is larger).

Although a case in which the probe cleaner is automatically fed for sample probe is described in the first embodiment above, the control method for the reset operation that leads to reduction in consumption of the probe cleaner is not limited thereto.

Although only the first probe cleaner and the second probe cleaner are used as the probe cleaners in the first embodiment above, the automatic analysis device may use three or more types of probe cleaners.

### Reference Signs List

1: reaction disc
2: reaction container
3: cleaning mechanism
4: spectrophotometer
4a: light source
5: stirring mechanism
6: stirring mechanism
7: reagent dispensing mechanism
7a: reagent probe
8: reagent dispensing mechanism
8a: reagent probe
9: reagent disc
10: reagent bottle
11: sample dispensing mechanism
11a: sample probe
12: sample dispensing mechanism
12a: sample probe
13: cleaning tank
14: probe cleaning mechanism
15: sample container
16: rack
17: sample transport mechanism
18: reagent syringe
19: sample syringe
20: cleaning pump
21: control unit
22: storage unit
23: cleaning tank
24: probe cleaning mechanism
29: sample syringe
30: cleaning tank
31: cleaning tank
32: cleaning tank
33: cleaning tank
118: probe cleaner storage portion
201: probe cleaner feeding pump
202: probe cleaner storage tank
203: probe cleaner storage tank
204: probe cleaner feeding syringe
205: probe cleaner remainder sensor
207: branch pipe
208: branch pipe
209: solenoid valve
210: solenoid valve
211: solenoid valve
212: solenoid valve
213: solenoid valve
214: solenoid valve
220: plunger

## Claims

1. An automatic analysis device comprising:
a dispensing probe that performs aspiration and discharge of at least one of a reagent and a sample and a liquid delivery mechanism that delivers each of a first probe cleaner and a second probe cleaner for cleaning the dispensing probe;
a heterogeneous probe cleaner region in which the first probe cleaner and the second probe cleaner may exist; and
a storage unit that stores a type of a probe cleaner existing in the heterogeneous probe cleaner region.

2. The automatic analysis device according to claim 1, wherein the liquid delivery mechanism is controlled based on the type of the probe cleaner stored in the storage unit.

3. The automatic analysis device according to claim 2, wherein the liquid delivery mechanism is capable of executing a first reset operation and a second reset operation in which the amount of delivered liquid is smaller than the amount of delivered liquid in the first reset operation, and
the automatic analysis device selects the first reset operation or the second reset operation based on the type of the probe cleaner stored in the storage unit and causes the liquid delivery mechanism to execute the selected reset operation.

4. The automatic analysis device according to claim 1, wherein
the storage unit further stores a device status, and
the automatic analysis device controls the liquid delivery mechanism by determining, based on the device status and the type of the probe cleaner stored in the storage unit, at least one of
- whether replacement of the probe cleaner existing in the heterogeneous probe cleaner region is necessary, and
- the type of the probe cleaner to be delivered for replacement.

5. The automatic analysis device according to claim 1, wherein the automatic analysis device performs replacement of the probe cleaner during a shutdown operation.

6. A control method for an automatic analysis device including,
a dispensing probe that performs aspiration and discharge of at least one of a reagent and a sample and a liquid delivery mechanism that delivers each of a first probe cleaner and a second probe cleaner for cleaning the dispensing probe, and
a heterogeneous probe cleaner region in which the first probe cleaner and the second probe cleaner may exist, wherein
the control method includes a step of storing a type of the probe cleaner existing in the heterogeneous probe cleaner region in a storage unit of the automatic analysis device.
